# EUROPEAN PATENT APPLICATION

(11) **EP 1 820 787 A1**
(43) Date of publication of application: **22.08.2007**
(21) Application number: 06021731.2
(22) Date of filing: 17.10.2006
(51) Int. Cl.: C04B 38/00

(54) **Method for manufacturing honeycomb structured body and honeycomb structured body**

(30) Priority: 26.12.2005 WO PCT/JP2005/023815
(71) Applicant: IBIDEN CO., LTD., Ogaki-shi Gifu 503-8604 (JP)
(72) Inventor: Yamamura, Norihiko, Ibigawacho, Ibi-gun, Gifu 501-0695 (JP); Ohno, Kazushige, Ibigawacho, Ibi-gun, Gifu 501-0695 (JP); Shimato, Koji, Neumann Janos u.1, 2326 (HU)
(74) Representative: HOFFMANN EITLE

(57) **Abstract**

The present invention aims at providing a method for manufacturing a honeycomb structured body, capable of efficiently giving information about a honeycomb molded body and/or a honeycomb fired body without affecting characteristics thereof, and effectively utilizing the information for production history and production control. The method for manufacturing a honeycomb structured body according to the present invention comprises manufacturing a pillar-shaped honeycomb molded body having a large number of cells longitudinally placed in parallel with one another with a cell wall therebetween; forming a honeycomb fired body by degreasing and firing the honeycomb molded body; and a binding step for binding a plurality of the honeycomb fired bodies by interposing a sealing material layer, and further comprising: a step of drawing information on a side face of the honeycomb molded body and/or the honeycomb fired body, in form of at least one of a graphic, a symbol, a character, a barcode and a two-dimensional code, in a step prior to the binding step.

## Description

### TECHNICAL FIELD

The present invention relates to a method for manufacturing a honeycomb structured body and a honeycomb structured body.

### BACKGROUND ART

There have been proposed various exhaust gas purifying honeycomb filters and catalyst supporting carriers each used for purifying exhaust gases discharged from internal combustion engines of vehicles such as buses and tracks, construction machines, and the like.

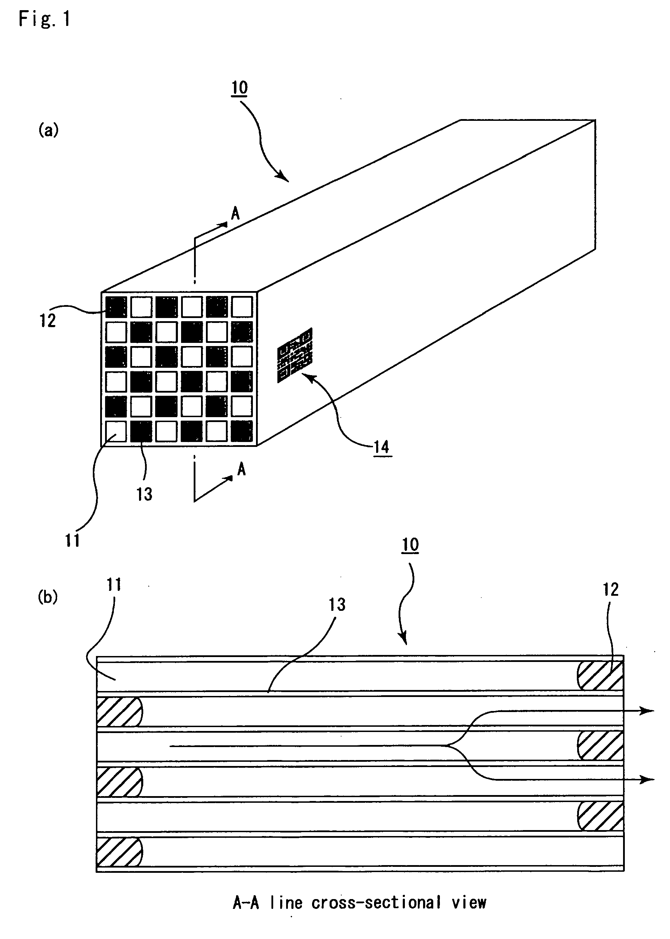

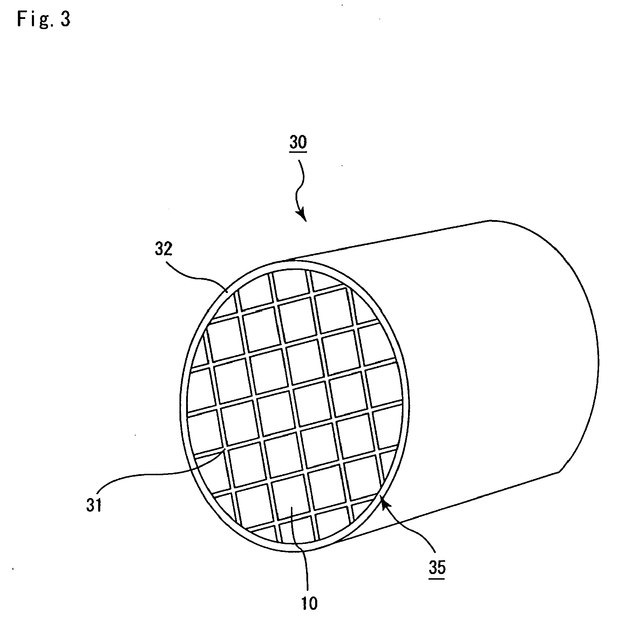

As an exhaust gas purifying honeycomb filter, specifically, for example, an exhaust gas purifying honeycomb filter shown in Fig. 3 can be described. In the exhaust gas purifying honeycomb filter shown in Fig. 3, a plurality of honeycomb fired bodies 10 made of silicon carbide and the like are bound to one another by interposing a sealing material layer (adhesive layer) 31 to form a honeycomb block 35, and a sealing material layer (coat layer) 32 is further formed on the circumference of this honeycomb block 35. Moreover, as shown in Fig. 1, the honeycomb fired body 10 has a number of cells 11 longitudinally placed in parallel with one another. Herein, a cell wall 13 between the cells 11 functions as a filter.

More specifically, as shown in Fig. 1 (b), each of the cells 11, formed in the honeycomb fired body 10, is sealed with a plug 12 at either one of the end portions on an exhaust gas inlet side and an exhaust gas outlet side thereof. Therefore, exhaust gases that have entered one cell 11 are discharged from another cell 11 after having always passed through a cell wall 13 between the cells 11.
Moreover, with respect to the honeycomb structured body having the above-mentioned structure, there has also been proposed a catalyst supporting carrier in which the end portions of a cell are not sealed and a catalyst is supported in the cell.

Here, the honeycomb structured body for an exhaust gas purifying honeycomb filter and a catalyst supporting carrier is manufactured by the following method, for example.
First, a mixed composition containing a solvent, a binder and the like in addition to ceramic particles serving as a main material is prepared. Extrusion-molding and the like is then carried out on this mixed composition to produce a pillar-shaped molded body having a large number of cells longitudinally placed in parallel with one another with a cell wall therebetween. Then, this molded body is cut into a predetermined length.

Next, the resulting molded body is dried to evaporate moisture therefrom, so that a dried molded body that has a predetermined strength and is easily handled is obtained.
Successively, both ends of this dried molded body are cut by a cutter or the like; thus, honeycomb molded bodies having a uniform length are manufactured.

Then, each of the end portions of the honeycomb molded body is sealed with plugs mainly composed of the above-mentioned ceramic particles in a checkered pattern, and degreasing and firing is then carried out on this honeycomb molded body, so that a honeycomb fired body 10 is manufactured (see Fig. 1).

Furthermore, protective films are laminated to the both end faces of the honeycomb fired body 10, and a plurality of the honeycomb fired bodies 10 are piled up by interposing a sealing material paste serving as a sealing material layer (adhesive layer) 31 to assemble an aggregated body of the honeycomb fired bodies. After having dried, this aggregated body is cut into a predetermined shape to form a honeycomb block 35. Sealing material paste is applied on the peripheral portion of the honeycomb block 35 to form a sealing material layer (coat layer) 32 thereon. By separating the protective films, a honeycomb structured body 30 functioning as an exhaust gas purifying honeycomb filter can be obtained (see Fig. 3).
Here, if only the piling-up process of the honeycomb fired bodies 10, and the like are carried out without conducting the opening-sealing process, a resulting product can be used as a catalyst supporting carrier.

However, after an exhaust gas purifying honeycomb filter or a catalyst supporting carrier has been manufactured by using the above-mentioned method as a product, and when there is any defect in the honeycomb structured body used therein, it is difficult to collect pieces of information as to which step of the respective manufacturing processes causes the defect and as to which of the honeycomb molded body or the honeycomb fired body has caused the defect. This makes it difficult to easily as well as positively carry out feedback and the like on production conditions.

Patent Document 1 has disclosed a honeycomb structured body with an end face or a side face on which information about the honeycomb structured body is displayed.
Patent Document 1: WO 04/106702 A1

### DISCLOSURE OF THE INVENTION

### PROBLEMS TO BE SOLVED BY THE INVENTION

However, in the honeycomb structured body disclosed in Patent Document 1, only the information about a completed honeycomb structured body is displayed on its side face or its end face. Consequently, with respect to a honeycomb structured body formed having a plurality of honeycomb fired bodies bound to one another, although information about the honeycomb fired bodies can be described, the information is only averaged information about the honeycomb fired bodies, and the information drawn on the honeycomb structured body disclosed in this document fails to provide individual and independent information for each of the honeycomb fired bodies.

Accordingly, an object of the present invention is to provide a method for manufacturing a honeycomb structured body, capable of efficiently giving information, such as a lot number, about a honeycomb molded body and/or a honeycomb fired body during the manufacturing thereof without affecting characteristics thereof, and effectively utilizing the information for production history and production control.

Moreover, the present invention aims to provide a honeycomb structured body from which specific information on each of the honeycomb fired bodies can be acquired, in a honeycomb structured body having a plurality of honeycomb fired bodies bound to one another.

### MEANS FOR SOLVING THE PROBLEMS

That is, the present invention provides a method for manufacturing a honeycomb structured body, comprising: manufacturing a pillar-shaped honeycomb molded body having a large number of cells longitudinally placed in parallel with one another with a cell wall therebetween by molding a ceramic material; forming a honeycomb fired body by degreasing and firing the honeycomb molded body; and a binding step for binding a plurality of the honeycomb fired bodies by interposing a sealing material layer, and further comprising: a step of drawing information on a side face of the honeycomb molded body and/or the honeycomb fired body, in form of at least one of a graphic, a symbol, a character, a barcode and a two-dimensional code, in a step prior to the binding step.

In the method for manufacturing a honeycomb structured body according to the present invention, desirably, the information is drawn by a laser marker.
Moreover, in the above-mentioned method for manufacturing a honeycomb structured body, desirably, the information is drawn on the honeycomb molded body.

Desirably, the information drawn in the step of drawing information is imprinted at a depth of 40% or less to a thickness of the cell wall.

A honeycomb structured body of the present invention is a honeycomb structured body in which a plurality of pillar-shaped honeycomb fired bodies are bound with one another by interposing a sealing material layer, each of the honeycomb fired bodies having a large number of cells longitudinally placed in parallel with one another with a cell wall therebetween, wherein information is drawn in form of at least one of a graphic, a symbol, a character, a barcode and a two-dimensional code on a side face of the honeycomb fired body.

In the honeycomb structured body of the present invention, desirably, the information is drawn by a laser marker.
In the honeycomb structured body of the present invention, desirably, the information is imprinted at a depth of 40% or less to a thickness of the cell wall.

### EFFECTS OF THE INVENTION

In accordance with the method for manufacturing a honeycomb structured body according to the present invention, information is drawn on a honeycomb molded body and/or a honeycomb fired body at any desired processes from the manufacturing of the honeycomb molded body to the binding step of the honeycomb fired bodies, among a sequence of steps for manufacturing a honeycomb structured body. Therefore, lot information of each of units (honeycomb molded bodies and honeycomb fired bodies) constituting the honeycomb structured body is efficiently accumulated or incorporated into a database, thereby making it possible to easily as well as positively carry out feedback and the like on production conditions.
Moreover, in particular, upon binding the respective units during a manufacturing process, it is possible to instantaneously confirm which constituent unit is currently used.

In accordance with the method for manufacturing a honeycomb structured body according to the present invention, information is drawn on each of the units constituting a honeycomb structured body; therefore, in particular, in the case where a plurality of constituent units having different characteristics are used to form a honeycomb structured body, information for each unit can be drawn on the corresponding unit, and while confirming this information, manufacturing controlling processes, such as combination controlling processes of the units, and quality controlling processes can be appropriately conducted efficiently.
Moreover, should any inconvenience occur in a finished product, the information of the unit with the inconvenience can be confirmed.

In accordance with the honeycomb structured body according to the present invention, information is drawn on each of the units constituting a honeycomb structured body; therefore, information for each unit can be obtained, in particular, in the case where a plurality of units having different characteristics are used to form a honeycomb structured body, information specific to the respective units can be obtained respectively.
Particularly, should any inconvenience occur in the honeycomb structured body, the information of the unit with the inconvenience can be confirmed.

### BEST MODE FOR CARRYING OUT THE INVENTION

The present invention provides a method for manufacturing a honeycomb structured body, comprising: manufacturing a pillar-shaped honeycomb molded body having a large number of cells longitudinally placed in parallel with one another with a cell wall therebetween by molding a ceramic material; forming a honeycomb fired body by degreasing and firing the honeycomb molded body; and a binding step for binding a plurality of the honeycomb fired bodies by interposing a sealing material layer, and further comprising: a step of drawing information on a side face of the honeycomb molded body and/or the honeycomb fired body, in form of at least one of a graphic, a symbol, a character, a barcode and a two-dimensional code, in a step prior to the binding step.
In the present specification, the shape indicated by the word "pillar" refers to any desired shape of a pillar including a round pillar, an oval pillar, a polygonal pillar and the like.

Within the sequence of steps for manufacturing a honeycomb structured body, the step of drawing information may be carried out on a product obtained at any desired manufacturing stage including the binding step in which a plurality of honeycomb fired bodies are bound to form an aggregated body of honeycomb fired bodies and the preceding steps. In other words, the step for drawing information may be carried out on materials such as a honeycomb molded body obtained from processes in which, after a ceramic material has been sufficiently mixed and kneaded so that the resulting mixture is then extrusion-molded by an extrusion molding machine, a drying process is carried out on the resulting product, if necessary, and a honeycomb fired body obtained by carrying out the honeycomb molded body to degreasing and firing processes.
Of course, processes carried out on the respective manufactured products prior to the step of drawing information are not limited to the extrusion-molding process and the drying, degreasing and firing processes, and may include a burr removing process on the end faces, an opening-sealing process and an inspection process simply carried out. The step of drawing information may be carried out on any product that has been subjected to any one of processes as long as the process is conducted before the binding step. Additionally, the sequence of manufacturing processes of a honeycomb structured body will be described later.

The step of drawing information in the method for manufacturing a honeycomb structured body according to the present invention may be carried out at any desired stage as long as it is conducted before the binding step. In this manner, since the step of drawing information is carried out before the binding step, the production control and quality control can be conducted on a constituent unit basis, such as honeycomb molded bodies and honeycomb fired bodies that constitute a honeycomb structured body; thus, it becomes possible to reduce losses of products, and consequently to improve the yield of products.

In the present invention, the step of drawing information is carried out on a side face of a honeycomb molded body and/or a honeycomb fired body.
Fig. 1 schematically shows a honeycomb fired body 10 on a side face of which a two-dimensional code 14 is imprinted as drawn information. However, not limited to the honeycomb fired body, the step of drawing information may be carried out on a honeycomb molded body.
Here, with respect to the position of the drawn information, not particularly limited as long as it is a side face of a honeycomb molded body and/or a honeycomb fired body, it may be placed on a position close to either one of the end faces when viewed in the longitudinal direction, or on a middle point between the two end faces. Moreover, for example, when the honeycomb molded body and/or the honeycomb fired body have a square pillar shape as shown in Fig. 1, the drawing position of information may be set on any one of the four side faces of the square pillar, and may be set at a position close to a corner portion at which the respective faces are made in contact with each another.

With respect to the number of pieces of information to be drawn, not particularly limited, the information may be drawn at one portion of a single honeycomb molded body or honeycomb fired body, or may be drawn at a plurality of portions thereof.
In the case where the information is drawn at a plurality of portions, respective pieces of information may be drawn collectively, or may be drawn in a dispersed manner; however, normally, a plurality of pieces of information are drawn collectively. This arrangement is more advantageous since the entire information can be read in a short time. In the case where different pieces of information are desired to be read for the respective manufacturing processes, the pieces of information may be displayed in a dispersed manner.
Moreover, upon drawing a plurality of pieces of information, the pieces of information may be drawn as one lot in a single process, or may be drawn in each of a plurality of processes in succession. Therefore, pieces of information may be drawn on either one of the honeycomb molded body and the honeycomb fired body, or after information has been drawn on a honeycomb molded body, information may be drawn also on the honeycomb fired body. As will be described later, the contents of the pieces of information may be the same or different from one another.

In the method for manufacturing a honeycomb structured body according to the present invention, information is drawn in form of at least one of a graphic, a symbol, a character, a barcode and a two-dimensional code.
The drawing form of information may be appropriately selected based upon amount of pieces of information about a honeycomb molded body and/or a honeycomb fired body on which the information is drawn, and the combination of drawing forms may be selected on demand.
Therefore, the present invention can provide a quick response at appropriate costs even in the case of a production mode of many kinds of products with small quantities.

Among the above-mentioned drawing forms, any of the drawing forms may be selected, and, for example, in the case of the application of a two-dimensional code, a large amount of information can be maintained at a small space, and these pieces of information can be read accurately in a short time.
With respect to the two-dimensional code, not particularly limited, a two-dimensional code of a stack type, such as PDF417, and a two-dimensional code of a matrix type, such as DataMatrix, MaxiCode and QR code, may be used.
As for the kind of two-dimensional code to be used, since the two-dimensional code has a different amount of information depending on its drawn area, the kind of two-dimensional codes can be properly selected so as to obtain a size of drawn area of the two-dimensional code required for the amount of information to be maintained.

With respect to the information to be drawn, various kinds of information about a honeycomb molded body and/or a honeycomb fired body are proposed, specific examples thereof include: those pieces of information about the production history and dimension precision, such as orderer, supplier, ordering date, ordering number, trade name, size, cell density, date, month and year of production, material, price, production conditions and production line, production apparatus, lot number and production number; those pieces of information about the weight required upon determining a catalyst adhering amount; and those pieces of information required for maintaining quality such as pressure loss and service life. Each of these pieces of information may be drawn alone, or these pieces of information may be drawn in combination.

Here, the above-mentioned information may be directly drawn on a honeycomb molded body and/or a honeycomb fired body by using a laser marker, ink or the like, or may be displayed by pasting a seal, label or the like bearing the information thereto.
More specifically, the information is preferably drawn directly by using a laser marker, a colorant, a pigment or the like, and those materials that would not be erased by heat treatment are preferably used. This arrangement makes it possible to prevent the drawn information from being erased due to heat treatment during manufacturing processes or in use after having been supplied.
Moreover, in an attempt to provide clear description so as to be read by a detector, the brightness, contrast and the like thereof are desirably adjusted in accordance with the background (that is, the drawing portion on a honeycomb molded body and/or a honeycomb fired body that are subjects of the step of drawing information).

In the case where an ink is applied, a pigment containing a cobalt compound such as iron oxide, copper oxide, CoO·nAl₂O₃ and CO₃(PO₄)₂, or an inorganic oxide, such as TiO₂ and SiO₂, is desirably used so as to prevent erasure due to the application of high-temperature exhaust gases. Here, the pigment may be carbon or the like.

With respect to the means used for drawing the information, although not particularly limited, a laser marker is desirably used.
The step of drawing information by the laser marker is achieved by carrying out transpiration and evaporation on the surface of a honeycomb molded body and/or a honeycomb fired body through heat and impact by a laser beam; therefore, the drawn information is not erased by heat treatment and the succeeding use of the product, and this method can carry out the step of drawing information at a high density even within a narrow area.
Moreover, by carrying out the step of drawing information on a honeycomb molded body and/or a honeycomb fired body through the laser marker, it becomes possible to draw the information directly onto the side face.

With respect to the kind of laser to be used as the laser marker, not particularly limited, as long as it can carry out a step of drawing information (that is, imprinting information) on a honeycomb molded body and/or a honeycomb fired body, and examples thereof include: CO₂ laser, YAG laser, YVO₄ laser, FAYb laser and the like.

Since the step of drawing information onto a side face of a honeycomb molded body and/or a honeycomb fired body is carried out by the laser marker as described above, it becomes possible to prevent the drawn information from being erased, and also to draw clear characters and the like in a short time.

Moreover, in the case where information is drawn by the laser marker, in particular, in the case where graphics, symbols or characters are drawn by using the laser marker, with respect to the graphics, symbols or characters, it is desirable to select those graphics, symbols or characters having a form in which straight lines and curved lines forming those are not overlapped with one another, and in the case where those graphics, symbols or characters having a form in which straight lines and curved lines forming those are overlapped with one another are used, those graphics, symbols or characters are desirably drawn in such a form as not to make the straight lines and curved lines overlapped with one another, within a range that allows recognition in a normal reading method such as visual recognition.
By drawing the graphics, symbols or characters in such a form, it becomes possible to alleviate a reduction in strength of the resulting honeycomb fired body.

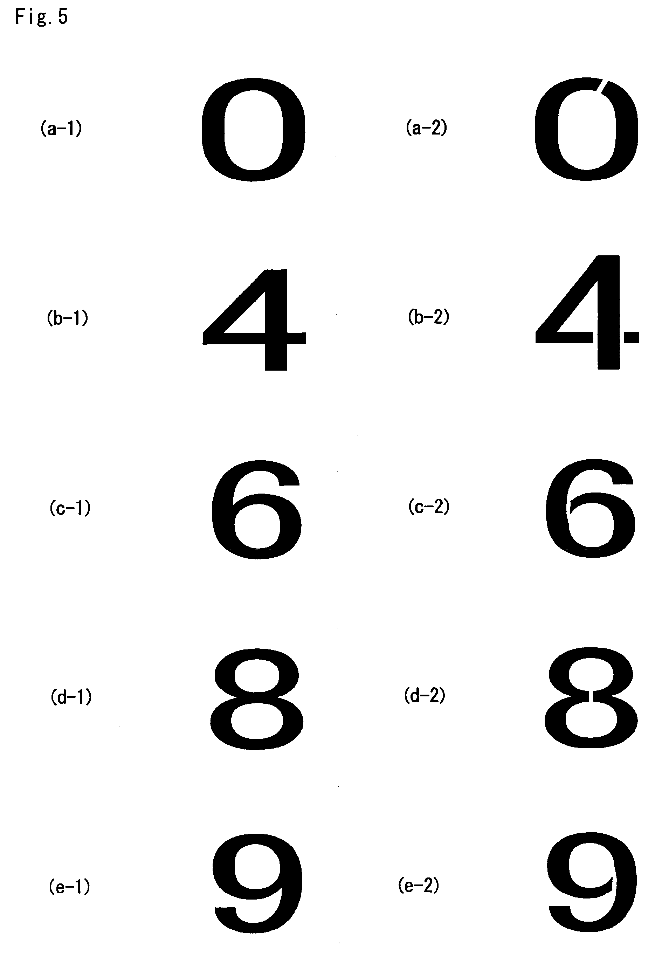

ReferringtoFig. 5, the following description will discuss this form in more detail by exemplifying 10 figures from "0 to 9"; in other words, among these 10 figures, "1, 2, 3, 5 and 7" are figures each of which has none of straight lines and curved lines forming each figure overlapped with one another. In contrast, "0, 4, 6, 8 and 9" are figures each of which has straight lines and curved lines forming each figure overlapped with one another. Here, upon drawing such a figure that has straight lines and curved lines overlapped with one another, not a form in which straight lines and curved lines forming each figure are mutually overlapped with one another as shown in Figs. 5 (a-1) to 5(e-1), but a form in which straight lines and curved lines are not mutually overlapped with one another within a range that allows recognition, for example, visual recognition, as shown in Figs. 5(a-2) to 5(e-2), is desirably used to draw the corresponding figure. Here, the forms shown in Fig. 5 only give examples of the form in which straight lines and curved lines are not mutually overlapped with one another within a range that allows recognition, for example, visual recognition, and various other forms may be proposed.

The above-mentioned step of drawing information may be carried out on a honeycomb molded body and/or a honeycomb fired body at any desired stage, as long as the stage corresponds to a process prior to the binding step of honeycomb fired bodies 10, as described above; however, in particular, the step of drawing information is desirably carried out on the honeycomb molded body.
The reason for this is explained below. In the case of a honeycomb fired body in which a honeycomb molded body has been degreased and fired, ceramic particles, which are constituent components, are sintered and firmly bonded to each other. Therefore, upon the step of drawing information by the laser marker, energy required for carrying out transpiration or evaporation on the surface of the honeycomb fired body increases. In contrast, in the case of a honeycomb molded body that has not been sintered, unlike the honeycomb fired body, the increase of energy can be suppressed, thereby making it possible to provide an advantageous method from the viewpoints of efficiency and costs.

Moreover, in an attempt to obtain a proper traceability for production control in the sequence of manufacturing processes, the step of drawing information is desirably carried out at a stage as early as possible in the manufacturing processes, and from this viewpoint also, the step of drawing information is desirably carried out on a honeycomb molded body. Since pieces of information such as production conditions and the like in processes after the step of drawing information can also be accumulated, even in the event of a defect in the product, the cause of the defect can be traced quickly and easily.

Desirably, the information drawn in the step of drawing information is imprinted at a depth of 40% or less to a thickness of the cell wall.
In the case where the information is imprinted at a depth exceeding 40%, the thickness of the cell wall decreases at the portion with the imprint, and tends to cause a reduction in the strength of the cell wall.
Moreover, the information drawn in the above-mentioned step is imprinted at a depth of 15% or more relative to the thickness of the cell wall. In the case where the information is imprinted at a depth of less than 15% of the thickness of the cell wall, the information might be erased due to friction and the like at the surface of the portion with the imprint, making it difficult to visually read the information or causing reading errors in the reading operation of a reader.

With respect to the honeycomb structured body manufactured by the method for manufacturing a honeycomb structured body according to the present invention, examples of the main component of constituent materials include: nitride ceramic materials, such as aluminum nitride, silicon nitride, boron nitride and titanium nitride, carbide ceramic materials, such as silicon carbide, zirconium carbide, titanium carbide, tantalum carbide and tungsten carbide, and oxide ceramic materials, such as alumina, zirconia, cordierite and mullite, and among these, silicon carbide, which has a high heat resistant property, superior mechanical characteristics and a high thermal conductivity, is desirably used. Here, materials, such as a silicon-containing ceramic material formed by blending metal silicon in the above-mentioned ceramic material and a ceramic material that is combined by silicon or a silicate compound, may also be used, and a material in which metal silicon is blended in silicon carbide is also desirably used.

Next, the following description will discuss a method for manufacturing a honeycomb structured body in accordance with the present invention in detail in the order of processes.
Here, the manufacturing method of the present invention will be explained by exemplifying the structure composed of silicon carbide as its main constituent material.
In the manufacturing method of the present invention, (1) first, silicon carbide powder and an organic binder are dry-mixed to prepare mixed powder.
With respect to the particle diameter of the silicon carbide powder, although not particularly limited, those which are less susceptible to shrinkage in the succeeding firing process are desirably used, and for example, those powders, prepared by combining 100 parts by weight of powder having an average particle diameter in the range of 0.3 to 50 µm with 5 to 65 parts by weight of powder having an average particle diameter in the range of 0.1 to 1.0 µm, are desirably used.
In order to adjust the pore diameter and the like of the honeycomb fired body, it is necessary to adjust the firing temperature, and the pore diameter can also be adjusted by adjusting the particle diameter of the silicon carbide powder.

With respect to the above-mentioned binder, not particularly limited, examples thereof include: methylcellulose, carboxy methylcellulose, hydroxy ethylcellulose, hydroxypropyl methylcellulose, polyethylene glycol and the like.
In general, the compounding amount of the above-mentioned binder is desirably set to 1 to 10 parts by weight with respect to 100 parts by weight of the silicon carbide powder.

(2) Next, a liquid-state plasticizer and lubricant, and water are mixed to prepare a mixed liquid, and successively, the mixed powder prepared in the process (1) and this mixed liquid are mixed by using a wet-type mixing machine to prepare a wet mixture used for manufacturing a molded body.

With respect to the above-mentioned plasticizer, not particularly limited, for example, glycerin and the like may be used.
Moreover, with respect to the lubricant, not particularly limited, for example, polyoxy alkylene based compounds, such as polyoxyethylene alkyl ether and polyoxy propylene alkyl ether, may be used.
Specific examples of the lubricant include: polyoxyethylene monobutyl ether and polyoxypropylene monobutyl ether.
Here, the plasticizer and the lubricant are not necessarily contained in the mixed liquid depending on cases.

Upon preparing the wet mixture, a dispersant solution may be used, and with respect to the dispersant solution, examples thereof include: water, an organic solvent such as benzene, and alcohol such as methanol.
Moreover, a molding auxiliary may be added to the wet mixture.
With respect to the molding auxiliary, not particularly limited, examples thereof include: ethylene glycol, dextrin, fatty acid, fatty acid soap and polyalcohol.

Furthermore, a pore-forming agent, such as balloons that are fine hollow spheres composed of oxide based ceramics, spherical acrylic particles and graphite, may be added to the above-mentioned wet mixture, if necessary.
With respect to the above-mentioned balloons, not particularly limited, for example, alumina balloons, glass micro-balloons, shirasu balloons, fly ash balloons (FA balloons) and mullite balloons may be used. Among these, alumina balloons are more desirably used.

Here, with respect to the wet mixture prepared as described above, the temperature thereof is desirably set to 28°C or less. When the temperature is too high, the organic binder tends to gel.
Moreover, the rate of organic components in the wet mixture is desirably set to 10% by weight or less, and the content of moisture is desirably set in the range of 10 to 17% by weight or less.

(3) Next, the wet mixture thus prepared is transported to an extrusion molding machine by a transporting apparatus, and the molded body extruded through extrusion-molding is cut into a predetermined length so that a honeycomb molded body having a predetermined shape is manufactured. Here, after the cutting process, if necessary, a dimension inspecting process may be conducted thereon. The dimension inspecting process may be conducted after the following drying process.
Additionally, in the manufacturing method of the present invention, between this process and the binding step for manufacturing an aggregate of honeycomb fired bodies in which the honeycomb fired bodies are bound to one another, the step of drawing information is carried out by using the aforementioned method.

Next, if necessary, the ceramic molded body is dried by using a drier, such as a microwave drier, a hot-air drier, a dielectric drier, a reduced-pressure drier, a vacuum drier and a frozen drier. Here, the honeycomb molded body has virtually the same shape as the honeycomb fired body shown in Fig. 1, and has not been subjected to the firing process.
Next, a predetermined amount of sealing material paste that forms plugs is injected into either one of ends of each cell, if necessary, so that predetermined cells are sealed.

With respect to the sealing material paste, although not particularly limited, those sealing material pastes that allow the plugs manufactured through post processes to have a porosity in a range of 30 to 75% are desirably used, and, for example, the same material as that of the wet mixture may be used.

Here, with respect to the opening diameter of the cells of the ceramic molded body manufactured in the present processes, all the cells may have the same opening diameter, or the cells may have different opening diameters.
In an attempt to manufacture a honeycomb molded body having different opening diameters between the gas inlet cells and the gas outlet cells, a metal mold to be used for the extrusion-molding process can be designed and manufactured by using generally-used techniques so as to obtain a desired shape.

Here, the thickness of the cell wall is desirably set in a range of 0.15 to 0.25 mm. When the thickness of the cell wall is less than 0.15mm, the strength tends to be lowered; in contrast, when it exceeds 0.25 mm, the thermal capacity of the honeycomb structured body becomes greater to cause degradation in temperature-raising/lowering characteristics, and when a catalyst is supported, this sometimes causes degradation in the catalyst reactivity.
Here, the "cell wall", referred to in the present specification, includes not only the cell walls on the inside that form a honeycomb structure surrounded by the outermost face, but also cell walls that form the outermost face of a honeycomb molded body and a honeycomb fired body. With respect to the thickness of the cell walls, the inside cell walls and the cell walls forming the outermost face may have the same thickness, or may have different thicknesses.

In the case where the thickness of the cell walls is set in a range from 0.15 to 0.25 mm with respect to the honeycomb molded body manufactured in the present manufacturing method, the upper limit of the depth of the imprint of information drawn by a laser marker is desirably set to 30% of the thickness of the cell wall.
This is because, in the case where the thickness of the cell wall is thin with a thickness of 0.15 to 0.25 mm, if the information is imprinted with a depth exceeding 30%, the strength of the cell wall tends to be lowered extremely.

(4) Next, the honeycomb molded body, which has the sealing material paste injected therein, and a degreasing process (for example, 200 to 500°C) and a firing process (for example, 1400 to 2300°C) under predetermined conditions are carried out on the honeycomb molded body so that it is possible to manufacture a honeycomb fired body formed by a single sintered body as a whole in which: a plurality of cells are placed in parallel with one another in the longitudinal direction, with a cell wall therebetween, and either one of end portions of the cells is sealed (see Fig. 1).
With respect to the conditions of the degreasing and firing processes of the honeycomb molded body, conventional conditions that have been used upon manufacturing a filter made from a porous ceramic material may be adopted.

(5) Next, honeycomb fired bodies, each having information drawn thereon in any one of the above-mentioned processes, are bound to one another. Here, in the binding step of the honeycomb fired bodies, the information may be drawn on a side face of the honeycomb fired body by using the aforementioned method.

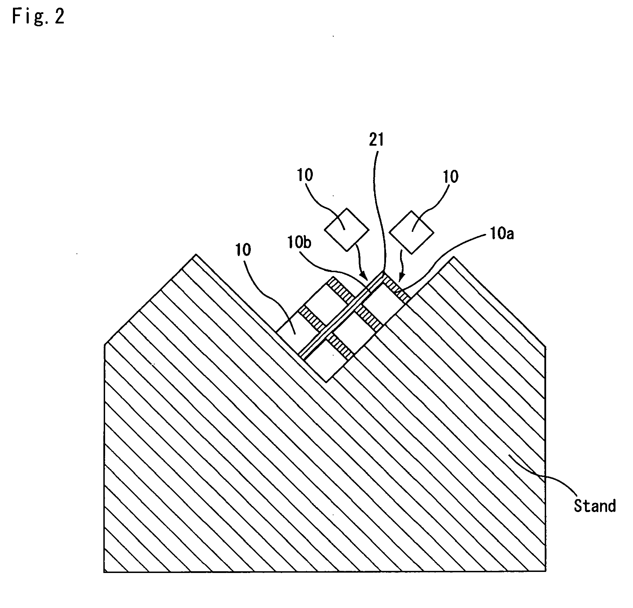

Fig. 2 is a side view schematically showing a manufacturing process in which honeycomb fired bodies are piled up to form an aggregate of honeycomb fired bodies in the method for manufacturing a honeycomb structured body according to the present invention.
More specifically, as schematically shown in Fig. 2, after placing honeycomb fired bodies 10 in a tilted state on a stand having a structure with a "V" shape in its cross section so that the honeycomb fired bodies 10 are piled up in a diagonally tilted state, a sealing material paste, which forms a sealing material layer (adhesive layer) 31 after post processes, is applied to two side faces 10a and 10b of which the faces are upwardly exposed, with a uniform thickness to form a paste layer 21, and a process in which another honeycomb fired body is successively piled up on the paste layer 21 is repeated so that an aggregate of pillar-shaped honeycomb fired bodies having a predetermined size is manufactured.
Thereafter, the aggregate of the honeycomb fired bodies is heated so that the sealing material paste layer is dried and solidified to form a sealing material layer (adhesive layer).

Here, in the case where the information is drawn on the side face of the honeycomb fired body in a process between the manufacturing process of the honeycomb fired body and the manufacturing process of the aggregate of the honeycomb fired bodies, inadditiontotheabove-mentionedeffects, the following effects can be obtained.
In other words, each of the honeycomb fired bodies 10 manufactured in the above-mentioned method tends to have slight deviations in its shape due to shrinkage errors at the time of drying, degreasing and firing processes, occurrence of warping and the like. Moreover, in the aggregate of honeycomb fired bodies, in general, when deviations in the individual honeycomb fired bodies, caused by some kind of problem, become greater, the resulting deviations in the shape of the honeycomb structured body also become greater, and tend to cause inconvenience in the characteristics of the honeycomb structured body as a product. In this case, in general, it is difficult to specify which stage in the manufacturing processes causes each of these deviations.
In contrast, with the above-mentioned arrangement in which pieces of information, such as a size and an amount of warping generated upon manufacturing a honeycomb fired body, are drawn on a side face of the honeycomb fired body, even when some kind of inconvenience occurs in the manufactured honeycomb structured body due to deviations in the shape or the like in each of the honeycomb fired bodies, it becomes possible to analyze the cause of the problem in detail.

With respect to the sealing material paste, examples thereof include inorganic fibers and/or inorganic particles in addition to an inorganic binder and an organic binder.
With respect to the inorganic binder, for example, silica sol, alumina sol and the like may be used. Each of these may be used alone or two or more kinds of these may be used in combination. Among the inorganic binders, silica sol is more desirably used.

With respect to the organic binder, examples thereof include polyvinyl alcohol, methyl cellulose, ethyl cellulose and carboxymethyl cellulose. Each of these may be used alone or two or more kinds of these may be used in combination. Among the organic binders, carboxymethyl cellulose is more desirably used.

With respect to the inorganic fibers, examples thereof include ceramic fibers, such as silica-alumina, mullite, alumina and silica. Each of these may be used alone or two or more kinds of these may be used in combination. Among the inorganic fibers, alumina fibers are more desirably used.

With respect to the inorganic particles, examples thereof include carbides and nitrides, and specific examples include inorganic powder or the like made from silicon carbide, silicon nitride and boron nitride. Each of these may be used alone, or two or more kinds of these may be used in combination. Among the inorganic particles, silicon carbide having a superior thermal conductivity is desirably used.

Moreover, a pore-forming agent, such as balloons that are fine hollow spheres composed of oxide-based ceramics, and spherical acrylic particles and graphite, may be added to the above-mentioned sealing material paste, if necessary.
With respect to the above-mentioned balloons, not particularly limited, for example, alumina balloons, glass micro-balloons, shirasu balloons, fly ash balloons (FA balloons) and mullite balloons may be used. Among these, alumina balloons are more desirably used.

In the method for manufacturing a honeycomb structured body according to the present invention, the above-mentioned step of drawing information is carried out at a process prior to the process used for binding a plurality of honeycomb fired bodies. The step of drawing information is carried out on a side face of the honeycomb molded body and/or the honeycomb fired body 10 in any desired one of processes of the manufacturing processes as described above.

With respect to a specific subject on which the drawing process of information is carried out, examples thereof include: a honeycomb molded body immediately after having been extrusion-molded and cut, a honeycomb molded body that has been dimension-inspected after the cutting process, a honeycomb molded body after having been dried by a microwave drier, a honeycomb molded body after having been dried and inspected, a honeycomb molded body in which a sealing material paste has been injected to end portions of the cells, a honeycomb molded body on which a degreasing process has been carried out, a honeycomb fired body formed by firing a honeycomb molded body, and a honeycomb fired body that is being piled up in a binding step.

(6) Next, a cutting process is carried out on this aggregate of honeycomb fired bodies in which a plurality of the honeycomb fired bodies are bonded to one another by interposing a sealing material layer (adhesive layer), using a diamond cutter or the like so that a cylindrical ceramic block is manufactured.
Here, the shape of the ceramic block manufactured in this manufacturing method is not particularly limited to a cylindrical shape, and may be formed into other shapes of a pillar such as a cylindroid shape.

Then, a sealing material layer (coat layer) is formed on the circumference of the ceramic block by using the above-mentioned sealing material paste. By carrying out such processes, a honeycomb structured body (see Fig. 3) in which a coat layer is formed on the circumference of a cylindrical ceramic block having a structure in which a plurality of honeycomb fired bodies are bound to one another by interposing an adhesive layer is manufactured.

Moreover, in the method for manufacturing a honeycomb structured body according to the present invention, thereafter, a catalyst may be supported on the honeycomb structured body on demand.
The supporting process of the catalyst may be carried out on the honeycomb fired bodies prior to being formed into an aggregate.
In the case where a catalyst is supported, an alumina film having a high specific surface area is desirably formed on the surface of the honeycomb structured body, and a co-catalyst and a catalyst such as platinum are applied onto the surface of the alumina film.

With respect to the method for forming the alumina film on the surface of the honeycomb structured body, for example, a method in which the honeycomb structured body is impregnated with a solution of a metal compound containing aluminum such as Al (NO₃) and then heated and a method in which the honeycomb structuredbody is impregnated with a solution containing alumina powder and then heated, are proposed.
With respect to the method for adhering a co-catalyst to the alumina film, for example, a method in which the honeycomb structured body is impregnated with a solution of a metal compound containing a rare-earth element, such as Ce (NO₃)₃, and then heated is proposed.
With respect to the method for adhering a catalyst to the alumina film, for example, a method in which the honeycomb structured body is impregnated with a solution of diammine dinitro platinum nitric acid ([Pt(NH₃)₂(NO₂)₂]HNO₃, platinum concentration: 4.53% by weight) and then heated is proposed.
Moreover, a catalyst may be adhered through a method in which after the catalyst has been preliminarily adhered to alumina particles, the honeycomb structured body is impregnated with a solution containing the alumina powder bearing the catalyst adhered thereto, and then heated.

Further, the honeycomb structured body of the present invention is a honeycomb structured body in which a plurality of pillar-shaped honeycomb fired bodies are bound with one another by interposing a sealing material layer, each of the honeycomb fired bodies having a large number of cells longitudinally placed in parallel with one another with a cell wall therebetween, wherein information is drawn in form of at least one of a graphic, a symbol, a character, a barcode and a two-dimensional code on a side face of the honeycomb fired body.
In the above-mentioned honeycomb structured body, the configuration of the honeycomb fired body, i.e., the kinds and shapes of information to be drawn on the side face of the honeycomb fired body, the shape of the honeycomb fired body itself, as well as the shape of the honeycomb structured body and the like is the same as that of the honeycomb structured body manufactured using the above-mentioned method for manufacturing a honeycomb structured body of the present invention.
Therefore, the honeycomb structured body of the present invention can favorably be manufactured through the above-mentioned method for manufacturing a honeycomb structured body of the present invention.

### EXAMPLES

The following description will discuss the present invention in detail by means of examples; however, the present invention is not intended to be limited only by these examples.

### (Example 1)

(1) Powder of α-type silicon carbide having an average particle diameter of 10 µm (250 kg), powder of α-type silicon carbide having an average particle diameter of 0.5 µm (100 kg) and an organic binder (methylcellulose) (20 kg) were mixed to prepare mixed powder.
Next, separately, a lubricant (UNILUB, made by NOF Corp.) (12 kg), a plasticizer (glycerin) (5 kg) and water (65 kg) were mixed to prepare a liquid mixture, and this liquid mixture and the mixed powder were mixed by using a wet-type mixing machine so that a wet mixture was prepared.
Next, this wet mixture was extrusion-molded, and then a cutting process is carried out to manufacture a honeycomb molded body.

(2) Next, a production number of each honeycomb molded body, which comprises alphabets and numbers with 10 digits, was drawn on a side face of each of the resulting honeycomb molded bodies by using a laser marker (KEYENCE ML-9110, manufactured by KEYENCE Corp.). The information was imprinted in such a manner that the depth of imprinted information after the firing process was set to a value (0.02 mm) as shown in Table 1. Moreover, the alphabets and numbers thus formed were drawn in such a manner that constituent straight lines and curved lines were not overlapped with one another.

(3)Next, the honeycomb molded body was dried by using a microwave drier, and after a paste having the same composition as the honeycomb molded body had been injected to predetermined cells, it was again dried by using a drier, and then degreased at 400°C, and fired at 2200°C in a normal-pressure argon atmosphere for 3 hours to manufacture a honeycomb fired body, which was a silicon carbide sintered body and had a porosity of 40%, an average pore diameter of 12.5 µm, a size of 34.3 mm × 34.3 mm × 150 mm, the number of cells (cell density) of 46.5 cells/cm² and a thickness of each cell wall of 0.25 mm.
Therefore, in the honeycomb fired body manufactured in this example, the depth of the drawn information was 8.0% relative to the thickness of the cell wall.

### (Examples 2 to 26)

The same processes as those of Example 1 were carried out except that the depth of imprinted information (production number) and the thickness of the cell wall were changed to values shown in Table 1 so that a honeycomb fired body was manufactured.

### (Evaluation of honeycomb fired body)

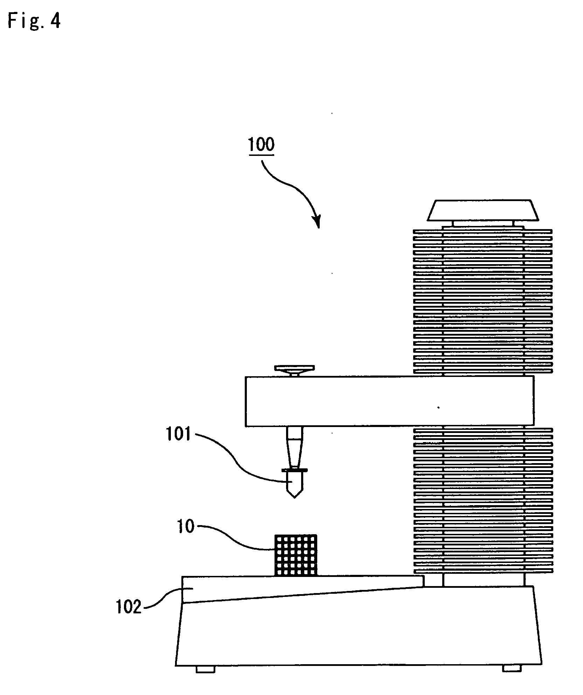

With respect to the honeycomb fired bodies according to Examples 1 to 26, the breaking strength was evaluated through the following method by using a texture analyzer TA-XT2i (manufactured by Stable Micro Systems Ltd.) shown in Fig. 4.
In other words, a honeycomb fired body 10 was mounted on the measuring table 102 of the texture analyzer 100 shown in Fig. 4, with the side face on which the production number was drawn being placed as the top surface, and a probe 101 was descended onto the portion with the production number drawn thereon at a rate of 0.5 mm/s so that a compression load upon breakage was measured.
Here, with respect to the probe 101, a probe (made of stainless steel), which had a shape in which a cone-shaped member having a tip of 90° was secured to the top of a cylindrical body in 15 mmφ with the overall length of 50 mm, was used. Moreover, the descent position of the tip of the probe 101 was determined at a portion that had no intersection with an inside cell wall, within the portion with the production number drawn on the side face.
The results are shown in Table 1.

**Table 1**

| | Material for honeycomb fired body | Cell wall thickness a (mm) a (mm) | Depth of imprinted information b (mm) | Depth ratio of imprinted information (b/a) × 100 (%) | Load upon breakage (N) |
|---|---|---|---|---|---|
| Example 1 | SiC | 0.25 | 0.02 | 8.0 | 24.2 |
| Example 2 | SiC | 0.25 | 0.04 | 16.0 | 22.1 |
| Example 3 | SiC | 0.25 | 0.06 | 24.0 | 19.3 |
| Example 4 | SiC | 0.25 | 0.08 | 32.0 | 17.5 |
| Example 5 | SiC | 0.25 | 0.10 | 40.0 | 13.4 |
| Example 6 | SiC | 0.25 | 0.12 | 48.0 | 9.5 |
| Example 7 | SiC | 0.15 | 0.02 | 13.3 | 14.3 |
| Example 8 | SiC | 0.15 | 0.04 | 26.7 | 12.1 |
| Example 9 | SiC | 0.15 | 0.06 | 40.0 | 8.8 |
| Example 10 | SiC | 0.15 | 0.08 | 53.3 | 7.5 |
| Example 11 | SiC | 0.15 | 0.10 | 66.7 | 5.7 |
| Example 12 | SiC | 0.15 | 0.12 | 80.0 | 4.6 |
| Example 13 | SiC | 0.20 | 0.02 | 10.0 | 19.3 |
| Example 14 | SiC | 0.20 | 0.04 | 20.0 | 17.7 |
| Example 15 | SiC | 0.20 | 0.06 | 30.0 | 12.8 |
| Example 16 | SiC | 0.20 | 0.08 | 40.0 | 9.6 |
| Example 17 | SiC | 0.20 | 0.10 | 50.0 | 8.7 |
| Example 18 | SiC | 0.20 | 0.12 | 60.0 | 7.8 |
| Example 19 | SiC | 0.30 | 0.02 | 6.7 | 28.7 |
| Example 20 | SiC | 0.30 | 0.06 | 20.0 | 26.3 |
| Example 21 | SiC | 0.30 | 0.08 | 26.7 | 23.4 |
| Example 22 | SiC | 0.30 | 0.12 | 40.0 | 19.0 |
| Example 23 | SiC | 0.40 | 0.02 | 5.0 | 34.1 |
| Example 24 | SiC | 0.40 | 0.06 | 15.0 | 31.3 |
| Example 25 | SiC | 0.40 | 0.08 | 20.0 | 29.4 |
| Example 26 | SiC | 0.40 | 0.12 | 30.0 | 26.0 |

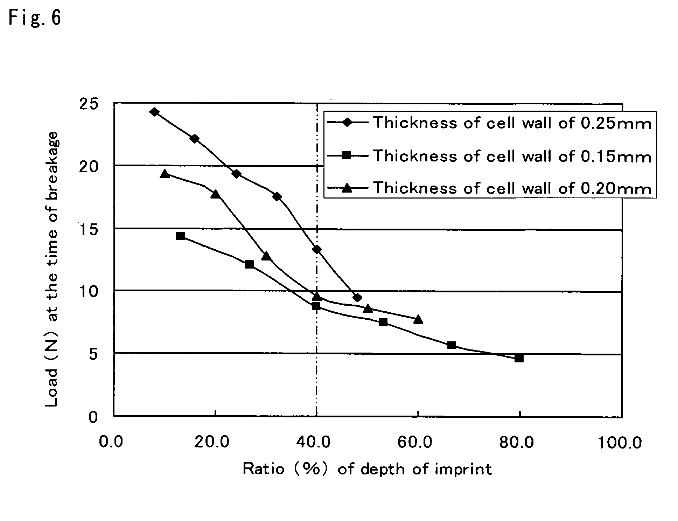

The results shown in Table 1 and Fig. 6 clearly indicate that the depth of imprinted information drawn on the honeycomb fired body is desirably 40% or less relative to the thickness of the cell wall from the viewpoint that the strength of the honeycomb fired body can be secured.
Fig. 6 is a graph that shows the relationship between the ratio (%) of the depth of the imprint and the load (N) at the time of breakage of the honeycomb fired bodies according to Examples 1 to 18.
In particular, it is clearly indicated that, in a honeycomb fired body having a thin cell wall with a thickness of 0.25 mm or less, the depth of imprinted information is desirably 30% or less relative to the thickness of the cell wall.

### BRIEF DESCRIPTION OF THE DRAWINGS

Fig. 1 (a) is a perspective view schematically showing a honeycomb fired body, and Fig. 1 (b) is a cross-sectional view taken along a line A-A in Fig. 1(a).
Fig. 2 is a side view schematically showing a process for piling up honeycomb fired bodies to manufacture an aggregate of the honeycomb fired bodies, in a method for manufacturing a honeycomb structured body according to the present invention.
Fig. 3 is a perspective view schematically showing one example of a honeycomb structured body manufactured by the method for manufacturing a honeycomb structured body according to the present invention.
Fig. 4 is a schematic view showing a texture analyzer used in the Examples.
Fig. 5 illustrates a form of a number drawn by a laser marker.
Fig. 6 is a graph that shows the relationship between the ratio (%) of the depth of the imprint and the load (N) at the time of breakage of the honeycomb fired bodies according to Examples 1 to 18.

### EXPLANATION OF SYMBOLS

- 10: Honeycomb fired body
- 11: Cell
- 12: Plug
- 13: Cell wall
- 14: Two-dimensional code
- 10a, 10b: Side face of honeycomb fired body
- 21: Paste layer
- 30: Honeycomb structured body
- 31, 32: Sealing material layer
- 35: Honeycomb block

## Claims

1. A method for manufacturing a honeycomb structured body, comprising:
manufacturing a pillar-shaped honeycomb molded body having a large number of cells longitudinally placed in parallel with one another with a cell wall therebetween by molding a ceramic material;
forming a honeycomb fired body by degreasing and firing said honeycomb molded body; and
a binding step for binding a plurality of said honeycomb fired bodies by interposing a sealing material layer, and
further comprising:
a step of drawing information on a side face of said honeycomb molded body and/or said honeycomb fired body, in form of at least one of a graphic, a symbol, a character, a barcode and a two-dimensional code, in a step prior to said binding step.

2. The method for manufacturing a honeycomb structured body according to claim 1,
wherein
said information is drawn by a laser marker.

3. The method for manufacturing a honeycomb structured body according to claim 1 or 2,
wherein
said information is drawn on the honeycomb molded body.

4. The method for manufacturing a honeycomb structured body according to any of claims 1 to 3,
wherein
said information drawn in said step of drawing information is imprinted at a depth of 40% or less to a thickness of said cell wall.

5. A honeycomb structured body in which a plurality of pillar-shaped honeycomb fired bodies are bound with one another by interposing a sealing material layer, each of the honeycomb fired bodies having a large number of cells longitudinally placed in parallel with one another with a cell wall therebetween,
wherein
information is drawn in form of at least one of a graphic, a symbol, a character, a barcode and a two-dimensional code on a side face of said honeycomb fired body.

6. The honeycomb structured body according to claim 5,
wherein
said information is drawn by a laser marker.

7. The honeycomb structured body according to claim 5 or 6,
wherein
said information is imprinted at a depth of 40% or less to a thickness of said cell wall.
